# EUROPEAN PATENT APPLICATION

(11) **EP 4 280 556 A1**
(43) Date of publication of application: **22.11.2023**
(21) Application number: 22174166.3
(22) Date of filing: 18.05.2022
(51) Int. Cl.: H04L 41/0816, H04L 41/12, H04L 41/0853

(54) **SYSTEM, METHOD AND APPARATUS FOR DYNAMICALLY ASSIGNING NETWORK TOPOLOGY TO ONE OR MORE NODES IN DISTRIBUTED LEDGER**

(71) Applicant: Siemens Aktiengesellschaft, 80333 München (DE)
(72) Inventor: RAJ, Arun, 635110 Hosur, Tamil Nadu (IN); SINGH, Saurabh Narayan, 81739 München (DE)
(74) Representative: Horn Kleimann Waitzhofer Patentanwälte PartG mbB

(57) **Abstract**

A system (100) and a method (200) for dynamically assigning a network topology to one or more nodes. The method comprising detecting, by a processing unit, a change in the distributed ledge; identifying the one or more nodes impacted by the detected change; determining a current network topology of the one or more nodes in the distributed ledger; determining if the current network topology of the one or more nodes associated with the detected change is required to be updated; and assigning the one or more nodes to a new network topology based on a predefined set of rules, if the update of current network topology is required.

## Description

The present disclosure generally relates to a decentralized network, and more particularly to a system, a method and an apparatus for dynamically assigning a network topology to one or more nodes adapted to manage multiple assets in a distributed ledger.

Distributed ledgers (for example, blockchains) are chronological databases as they record data in form of chained or ordered blocks and each block corresponds to the data or transactions in a specific logical or real time epoch. Compared to its inception and use cases in the public domain, blockchain now is being used for a variety of applications in the industrial domain like supply chain, Internet-of-Things (IoT) environment, etc. Distributed ledgers allow storing of data in a time mapped, immutable manner and decentralized manner. IoT devices have many advantages in using decentralized networks as a base technology for communication, data storage and computation. This also unlocks many new use cases like data sharing, pay per use, maintenance, and predictive analysis. Essentially, decentralized networks rely on cryptography, networking, and consensus to realize a decentralized system for collaboration and record keeping between different nodes in the network such as a blockchain network.

Networking is one of the prime aspects of any decentralized system and due to the absence of a centralized arbitrator (or server), peer to peer (P2P) networks are used wherein the participant nodes are connected to each other directly. Such P2P networks are, however, difficult to manage as any node in the decentralized network (for example, blockchain network) can connect to any other node in the blockchain network randomly. This random assignment of nodes in the blockchain network causes skew and other imbalances in the blockchain network.

This problem may be avoided in general use cases like cryptocurrency as the node capabilities as well as the network availability is abundant. However, for specific use cases which are dictated by varying environmental conditions and limited resources, a more organized approach is required which can enable nodes to connect to each other in a structured manner thereby enabling creation of compact networks and targeted messaging. That said, it may also be understood that the change in the environmental conditions are liable to vary with time.

Furthermore, there are limitations to P2P networking and connectivity. Notably, P2P networks by default, are unstructured in nature, i.e., there is no predetermined geometry or routing paths and all messages are randomly flooded across the network. This can work for static networks with abundant resources, but any dynamic reconfiguration becomes infeasible. An alternative to this is structuring the network by enforcing a well-defined geometry (like ring, tree, cube, etc.) and specifying routing policies. Moreover, this approach compacts the network by limiting the network links on individual nodes and enables targeted messaging at lower overheads. Currently, there is no such technique known wherein the arrangement of the nodes in the blockchain network can dynamically change with respect to the changes in the environmental conditions. Furthermore, the lack of automatically updating the optimal arrangement of the nodes in the decentralized network decreases the efficiency and performance of the decentralized network.

In light of the above, there exists a need to provide a distributed ledger which is capable of dynamically assigning a new network topology to the nodes in the distributed ledger in response to a change in the environmental conditions of the distributed ledger.

The object of the present disclosure is achieved by a method for dynamically assigning a network topology to one or more nodes. Herein, the one or more nodes are adapted to manage multiple assets in a distributed ledger. The method comprises detecting, by a processing unit, a change in the distributed ledger. The method comprises identifying, by the processing unit, the one or more nodes impacted by with the detected change. The method comprises determining, by the processing unit, a current network topology of the one or more nodes in the distributed ledger. The method comprises determining if the current network topology of the one or more nodes associated with the detected change is required to be updated. The method comprises assigning the one or more nodes to a new network topology based on a predefined set of rules, if the update of current network topology is required.

According to an embodiment, the change in the distributed ledger is at least one of: a node entering the distributed ledger, a node leaving the distributed ledger or a change in environmental conditions of the distributed ledger.

According to an embodiment, the method of detecting the change comprises detecting a known change in the distributed ledger, wherein the known change is notified to the other nodes in the distributed ledger prior to occurring in the distributed ledger.

According to an embodiment, the method of detecting the change comprises detecting an unknown change in the distributed ledger, wherein the unknown event occurs abruptly in the distributed ledger without any notification to the other nodes in the distributed ledger.

According to an embodiment, the method of detecting an unknown change comprises continuously monitoring network links between the plurality of nodes by the processing unit.

According to another embodiment, the method of detecting an unknown change comprises monitoring network traffic in the distributed ledger by the processing unit.

According to an embodiment, determining if the current network topology of the one or more nodes associated with the detected change is required to be updated based on the performance of the current topology as impacted by the change in the detected event.

According to an embodiment, the method of assigning the one or more nodes to a new network topology based on the predefined set of rules further comprises assigning new neighboring nodes to the one or more nodes associated with the current topology. Further, the method comprises determining new network links between the one or more nodes to form the new topology.

According to an embodiment, the network topology is at least one of: a star topology, a ring topology, a bus topology, a tree topology and a hybrid topology.

According to an embodiment, the predefined set of rules are stored in a knowledge base.

According to an embodiment, the method further comprises defining a new rule for a new change occurred in the distributed ledger. Herein, the new rule defines a relationship between the new change and a preferred network topology when the change is detected in the distributed ledger. Further, the method comprises updating the knowledge base with the defined new rule.

The object of the present disclosure is also achieved by a system for dynamically assigning a network topology to one or more nodes in a distributed ledger, wherein the plurality of nodes are adapted to manage multiple assets. The system comprises one or more processing units, and a memory communicatively coupled to the one or more processing units, the memory comprising a module stored in the form of machine-readable instructions executable by the one or more processing units, wherein the module is configured to perform the method steps described above.

The object of the present disclosure is further achieved by a computer-program product, having computer-readable instructions stored therein, that when executed by a processing unit, cause the processing unit to perform the method steps described above.

The object of the present disclosure is further achieved by a computer readable medium on which program code sections of a computer program are saved, the program code sections being loadable into and/or executable in a system to make the system execute the method steps described above when the program code sections are executed in the system.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

Throughout the present disclosure, the term "distributed ledger" as used herein refers to decentralized database that is consensually shared and synchronized across multiple nodes accessible by multiple users. In a specific example, the distributed ledger is a blockchain.

By a way of example, the term "blockchain", "blockchain framework" or "blockchain network" is also used here and may refer to a decentralized network that includes the plurality of nodes. In an example, the blockchain network is a consortium blockchain network. Such plurality of nodes may, for example, perform transactions in the blockchain network.

As used herein, the term "computing device" may refer to be a physical, a virtual device or a computer-program product. In many implementations, the computing device may be any device capable of performing operations, such as a dedicated processor, a portion of a processor, a virtual processor, a portion of a virtual processor, portion of a virtual device, or a virtual device. The system of the present disclosure may include or be embodied in the computing device. In some implementations, the computing device may execute an application for writing and retrieval of data in a blockchain.

As used herein, the term "network" may refer to a communication framework utilized for communication of the blockchain network, the computing device and the ledger. Further, the term "network topology" may refer to physical and/or logical arrangement of network nodes in the network.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention:
FIG 1 illustrates a block-diagram of a system dynamically assigning a network topology to one or more nodes adapted to manage multiple assets in a distributed ledger, in accordance with an embodiment of the present invention; and
FIG 2 illustrates a flowchart depicting a method for dynamically assigning a network topology to one or more nodes adapted to manage multiple assets in a blockchain network, in accordance with one or more embodiments of the present disclosure.

Examples of a method, a system, a computer-program product and a computer readable medium for dynamically assigning network topology to one or more nodes in a distributed ledger is disclosed herein. Various embodiments are described with reference to the drawings, wherein like reference numerals are used to refer to like elements throughout. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Unless specified otherwise in the following description, the terms "perform", "calculate", "computer-assisted", "compute", "establish", "generate", "configure", "reconstruct", and the like preferably relate to operations and/or processes and/or processing steps that change and/or generate data and/or convert the data into other data, wherein the data may be represented or be present in particular in the form of physical variables, for example in the form of electrical impulses. The expression "computer" should in particular be interpreted as broadly as possible in order in particular to cover all electronic devices having data processing properties. Computers may thus for example be personal computers, servers, programmable logic controllers (PLCs), hand-held computer systems, pocket PC devices, mobile radio devices and other communication devices able to process data in a computer-assisted manner, processors and other electronic data processing devices.

Moreover, in particular a (relevant) person skilled in the art, with knowledge of the method claim/method claims, is of course aware of all routine possibilities for realizing products or possibilities for implementation in the prior art, and so there is no need in particular for independent disclosure in the description. In particular, these customary realization variants known to the person skilled in the art can be realized exclusively by hardware (components) or exclusively by software (components). Alternatively, and/or additionally, the person skilled in the art, within the scope of his/her expert ability, can choose to the greatest possible extent arbitrary combinations according to embodiments of the invention for hardware (components) and software (components) in order to implement realization variants according to embodiments of the invention.

A combination according to embodiments of the invention for hardware (components) and software (components) can occur in particular if one portion of the effects according to embodiments of the invention is brought about exclusively by special hardware (e.g., a processor in the form of an ASIC or FPGA) and/or another portion by the (processor- and/or memory-aided) software.

In particular, in view of the high number of different realization possibilities, it is impossible and also not helpful or necessary for the understanding of embodiments of the invention to name all these realization possibilities. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can also serve as features for another exemplary embodiment, in particular without this having to be explicitly stated in the respective exemplary embodiment.

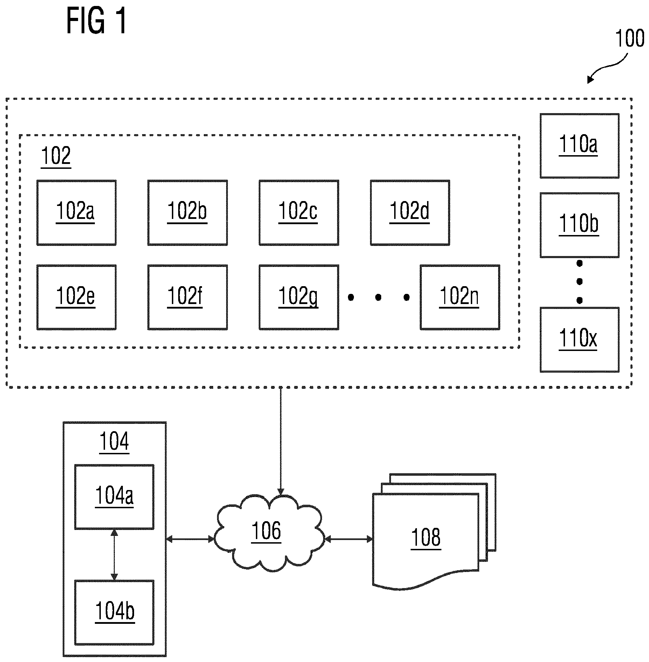

FIG 1 shows an exemplary embodiment of the present disclosure as a schematic diagram of a system 100 implemented for dynamically assigning network topology to one or more nodes 102a, 102b, ..., 102n in a distributed ledger 102 adapted to manage multiple assets 110a, 110b, ..., 110x. In present implementation, the system 100 may reside on or may be executed by one or more computing devices 104, which may be connected to a network (e.g., the internet or a local area network), such as a network 106. The system 100 further includes a ledger 108 (such as a database). The blockchain 102, the computing devices 104 and the ledger 108 are communicatively coupled via the network 106.

As illustrated in FIG 1, the system 100 includes the distributed ledger 102. In an example, the distributed ledger 102 is a blockchain. The blockchain 102 includes a plurality of nodes, such as nodes 102a, 102b, ..., 102n. Specifically, the blockchain 102 is a decentralized network that includes the plurality of nodes 102a, 102b, ..., 102n. In an example, the blockchain 102 is a consortium blockchain 102. Within the context of embodiments of the present disclosure, a "blockchain node", "node", "node of a blockchain" and the like can be understood to mean for example devices (e.g., field devices), computers, clients or subscribers that perform operations with a blockchain, such as the blockchain 102.

In the illustration of FIG 1, one computing device 104 has been shown. Also, as shown, the computing device 104 may include one or more processing units 104a and a memory 104b communicatively coupled to the one or more processing units 104a. Examples of computing devices 104 may include, but are not limited to, a personal computer(s), a laptop computer(s), mobile computing device(s), a server computer, a series of server computers, a mainframe computer(s), or a computing cloud(s). In general, the "computing device" in connection with embodiments of the present may be understood to mean for example a computer (system), a client, a smartphone, a device or a server that are in each case arranged outside the blockchain or are not participants in the distributed database (for example the blockchain) (that is to say do not perform operations with the distributed database or only query it without however performing transactions, inserting data blocks or calculating proof of work).

In certain implementations, the computing device 104 may be a physical or virtual device. In many implementations, the computing device 104 may be any device capable of performing operations, such as a dedicated processor, a portion of a processor, a virtual processor, a portion of a virtual processor, portion of a virtual device, or a virtual device. In some implementations, a processor may be a physical processor or a virtual processor. In some implementations, a virtual processor may correspond to one or more parts of one or more physical processors. In some implementations, the instructions/logic may be distributed and executed across one or more processors, virtual or physical, to execute the instructions/logic.

In an example, the computing device 104 may be a computer-program product programmed for performing the said purpose. In another example, the computing device 104 may be a computer readable medium on which program code sections of a computer program are saved, the program code sections being loadable into and/or executable in a system to make the system execute the steps for performing the said purpose. The computing device 104 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device 104 can be implemented in a single chip. The system of the present disclosure as discussed in the preceding paragraphs may include or be embodied in the computing device 104. It may be appreciated that the two systems and (and the corresponding components/elements) may be equivalent for the purposes of the present disclosure.

In one embodiment, the computing device 104 includes a communication mechanism such as a bus for passing information among the components of the computing device 104. As discussed, the computing device 104 includes the one or more processing units 104a and the memory 104b. Generally, the memory 104b is communicatively coupled to the one or more processing units 104a. Hereinafter, the one or more processing units 104a are sometimes simply referred to as processor. Herein, in particular, the processor 104a has connectivity to the bus to execute instructions and process information stored in the memory. The processor 104a may include one or more processing cores with each core configured to perform independently. A multi-core processor enables multiprocessing within a single physical package. Examples of a multi-core processor include two, four, eight, or greater numbers of processing cores. Alternatively, or in addition, the processor 104a may include one or more microprocessors configured in tandem via the bus to enable independent execution of instructions, pipelining, and multithreading. The processor 104a may also be accompanied with one or more specialized components to perform certain processing functions and tasks such as one or more digital signal processors (DSP), or one or more application-specific integrated circuits (ASIC). A DSP typically is configured to process real-world signals (e.g., sound) in real time independently of the processor. Similarly, an ASIC can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

As used herein, the term "processor" refers to a computational element that is operable to respond to and processes instructions that drive the system. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system.

The processor 104a and accompanying components have connectivity to the memory 104b via a bus (not shown). The memory 104b includes both dynamic memory (e.g., RAM, magnetic disk, writable optical disk, etc.) and static memory (e.g., ROM, CD-ROM, etc.) for storing executable instructions that when executed perform the method steps described herein for writing and retrieval of data in the distributed ledger 102. In particular, the memory 104b includes a module arrangement to perform steps for writing and retrieval of data in the distributed ledger 102. The memory 104b also stores the data associated with or generated by the execution of the inventive steps.

Herein, the memory 104b may be volatile memory and/or non-volatile memory. The memory 104b may be coupled for communication with the processing unit.

The processing unit 104a may execute instructions and/or code stored in the memory 104b. A variety of computer-readable storage media may be stored in and accessed from the memory 104b. The memory 104b may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In some implementations, the instruction sets and subroutines of the system 100, which may be stored on storage device, such as storage device coupled to computer, may be executed by one or more processors 104a. In some implementations, one or more of storage devices may include but are not limited to: hard disk drives; flash drives, tape drives; optical drives; RAID arrays; random access memories (RAM); and read-only memories (ROM). Examples of user devices (and/or computer) may include, but are not limited to, a personal computer, a laptop computer, a smart/data-enabled, cellular phone, a notebook computer, a tablet, a server, a television, a smart television, a media capturing device, and a dedicated network device.

In some implementations, the computing device 104 may include a data store, such as a database (e.g., relational database, object-oriented database, triplestore database, etc.) and may be located within any suitable memory location, such as storage device coupled to computer. In some implementations, data, metadata, information, etc. described throughout the present disclosure may be stored in the data store. In some implementations, computer may utilize any known database management system such as, but not limited to, DB2, in order to provide multi-user access to one or more databases, such as the above noted relational database. In some implementations, the data store may also be a custom database, such as, for example, a flat file database or an XML database.

In some implementations, any other form(s) of a data storage structure and/or organization may also be used. In some implementations, the system 100 may be a component of the data store, a standalone application that interfaces with the above noted data store and/or an applet / application that is accessed via client applications. In some implementations, the above noted data store may be, in whole or in part, distributed in a cloud computing topology. In this way, computer and storage device may refer to multiple devices, which may also be distributed throughout the network 106.

In some implementations, the computing device 104 may execute an application for dynamically assigning network topology to one or more nodes in distributed ledger 102 with the plurality of nodes 102a, 102b, ..., 102n adapted to manage multiple assets 110a, 110b, ..., 110x, as described later in detail in the description. In some implementations, the system 100 and/or application may be accessed via one or more of client applications. In some implementations, the system 100 may be a standalone application, or may be an applet / application / script / extension that may interact with and/or be executed within application a component of application and/or one or more of client applications. In some implementations, application may be a standalone application, or may be an applet / application / script / extension that may interact with and/or be executed within the system 100, a component of the system 100, and/or one or more of client applications. In some implementations, one or more of client applications may be a standalone application, or may be an applet / application / script / extension that may interact with and/or be executed within and/or be a component of the system 100 and/or application. Examples of client applications may include, but are not limited to, a standard and/or mobile web browser, an email application (e.g., an email client application), a textual and/or a graphical user interface, a customized web browser, a plugin, an Application Programming Interface (API), or a custom application. The instruction sets and subroutines of client applications which may be stored on storage devices coupled to user devices may be executed by one or more processors and one or more memory architectures incorporated into user devices.

In some implementations, one or more of client applications may be configured to effectuate some or all of the functionality of the system 100 (and vice versa). Accordingly, in some implementations, the system 100 may be a purely server-side application, a purely client-side application, or a hybrid server-side / client-side application that is cooperatively executed by one or more of client applications and/or the system 100.

In some implementations, one or more of client applications may be configured to effectuate some or all of the functionality of application (and vice versa). Accordingly, in some implementations, application may be a purely server-side application, a purely client-side application, or a hybrid server-side / client-side application that is cooperatively executed by one or more of client applications and/or application. As one or more of client applications the system 100, and application taken singly or in any combination, may effectuate some or all of the same functionality, any description of effectuating such functionality via one or more of client applications the system 100, application or combination thereof, and any described interaction(s) between one or more of client applications the system 100, application or combination thereof to effectuate such functionality, should be taken as an example only and not to limit the scope of the disclosure.

In some implementations, one or more of users may access the system 100 (e.g., using one or more of user devices) directly through the network 106. In some implementations, the network 106 may be connected to one or more secondary networks, examples of which may include but are not limited to: a local area network; a wide area network; or an intranet, for example. In some implementations, the computing device 104 may be connected to the network 106 through secondary network with phantom link line.

In some implementations, the various user devices may be directly or indirectly coupled to the network 106. For example, user device may be directly coupled to the network 106 via a hardwired network connection. Alternatively, user device may be wirelessly coupled to the network 106 via wireless communication channel established between user device and wireless access point (i.e., WAP) which in turn may be directly coupled to the network 106. WAP may be, for example, an IEEE 802.11a, 802.11b, 802.11g, 802.11ac, 802.11ae, Wi-Fi^{®}, RFID, and/or Bluetooth^{™} (including Bluetooth^{™} Low Energy) device that is capable of establishing wireless communication channel between user device and WAP. In other examples, user device may be wirelessly coupled to the network 106 via wireless communication channel established between user device and cellular network / bridge which may be directly coupled to the network 106. User devices may execute an operating system, examples of which may include but are not limited to, Android^{®}, Apple^{®} iOS^{®}, Mac^{®} OS X^{®}; Red Hat^{®} Linux^{®}, or a custom operating system.

In some implementations, some or all of the IEEE 802.11x specifications may use Ethernet protocol and carrier sense multiple access with collision avoidance (i.e., CSMA/CA) for path sharing. The various 802.11x specifications may use phase- shift keying (i.e., PSK) modulation or complementary code keying (i.e., CCK) modulation, for example, Bluetooth^{™} (including Bluetooth^{™} Low Energy) is a telecommunications industry specification that allows, e.g., mobile phones, computers, smart phones, and other electronic devices to be interconnected using a short-range wireless connection. Other forms of interconnection (e.g., Near Field Communication (NFC)) may also be used.

It is to be understood that the system and computer-assisted method described herein may be implemented in various forms of hardware, software, firmware, special purpose processors, or a combination thereof. "Computer-assisted" in connection with embodiments of the present disclosure may be understood to mean for example an implementation of the method in which in particular a processor executes at least one method step of the method. One or more of the present embodiments may take a form of a computer program product comprising program modules accessible from computer-usable or computer-readable medium storing program code for use by or in connection with one or more computers, processors, or instruction execution system. A "module" in connection with embodiments of the invention may be understood to mean for example a processor and/or a storage unit for storing program commands. By way of example, the processor is specifically configured so as to execute the program commands such that the processor executes functions in order to implement or perform the method according to embodiments of the invention or a step of the method according to embodiments of the invention. For the purpose of this description, a computer-usable or computer-readable medium can be any apparatus that can contain, store, communicate, propagate, or transport the program for use by or in connection with the instruction execution system, apparatus, or device.

As described herein, the module in the memory 104b of the computing device 104 is configured to perform the operations of a method (as described later) for dynamically assigning a network topology to one or more nodes 102a, 102b, ..., 102n adapted to manage multiple assets 110a, 110b, ..., 110x in the distributed ledger 102. The computing device 104 performs the operations of the method by use of the network 106. Further, the transactions between the one or more nodes of the blockchain 102 are stored in the ledger 108 via the network 106. Details for writing and retrieval of data in the blockchain 102 with the plurality of nodes 102a, 102b, ..., 102n adapted to manage multiple assets 110a, 110b, ..., 110x are explained in detail hereinafter.

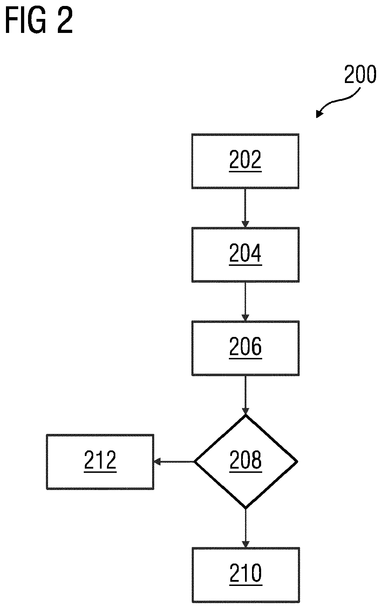

FIG 2 is a flowchart representation of a method 200 listing steps involved in dynamically assigning network topology to one or more nodes 102a, 102b, ..., 102n adapted to manage multiple assets 110a, 110b, ..., 110x in a distributed ledger 102, in accordance with an embodiment of the present disclosure. Hereinafter, the method 200 of FIG 2 is explained in conjunction with elements of FIG 1. It may be understood that in the distributed ledger 102, multiple assets 110a, 110b, ..., 110x from multiple use cases can exist.

In some examples, the distributed ledger 102 is a blockchain based ledger wherein events and transactions are verified by the network participants in a decentralized manner and recorded on all participant nodes. Every node 110a, 110b, ..., 110x is identified by its address which is in turn derived from its public-private key pair. All data is recorded on the blockchain and accessible to all participants. This information is immutable and hence provides accountability and audit trails. Blockchain network (achieved via distributed consensus mechanisms) ensures that no single entity can control the network and as long as majority of the participants are honest, the network will function in a fair and unbiased manner. Blockchain also supports smart contracts which allows the business logic to be encoded in the form of a deterministic computer program. This program is executed in an isolated secure environment on all nodes and verified in a distributed manner.

In some examples, a ledger may be stored on a large number of publicly available devices, each acting as a "node" for storing a copy of the ledger (e.g., being collaboratively maintained by anonymous peers on a network). In some embodiments, the ledger is only stored and maintained on a set of trusted "nodes", such as the computing systems of authorized users. In some embodiments, a combination and/or a "mix" of both trusted nodes and public nodes may be utilized, with the same and/or different rules being applied to activities performed at each (e.g., a different validation process may be used for untrusted nodes, or simply untrusted nodes may be unable to perform certain activities). In some embodiments, there may be different levels of nodes with differing characteristics and applied business logic.

The ledgers, ledger entries, and/or information stored on the ledger entries may be used for storing any information related to the assets 110a, 110b, ...110x and automated "smart contracts". Smart contracts are computer instructions or code intended to facilitate, verify, or enforce the negotiation or performance of a contract. Further, the ledger and ledger entries may utilize encryption technology to facilitate and/or validate digital signatures, for example, facilitating multi-signature documentation, ensuring the authenticity and integrity of vehicle record information, and so on.

Each of the one or more assets 110a, 110b, ....110x may have, at various times, versions of the ledger, and the ledger may be maintained through the propagation of entries and/or updates that may be copied across ledgers. Ledger entries may contain elements of information (e.g., transaction records, document content, contract clauses, versioning information). There may be various rules and/or logic involved in activities relating to the ledger entries (e.g., creating, updating, validating), for example, a supermajority or a unanimous consent between entities may be enforced as a condition to an activity relating to an entry. In some embodiments, distributed ledgers are utilized and the ledger entries are adapted to have various linkages to one another such that the integrity of the ledger entries can be reinforced and/or validated.

The ledger may be maintained through, for example, a "distributed network system", the distributed network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

Further, in the present embodiments, each of the plurality of nodes 102a, 102b, ..., 102n is adapted to manage one or more of the multiple assets 110a, 110b, ..., 110x. Notably, the nodes 102a, 102b, ..., 102n in the distributed ledger 102 are connected to each other via network links in a specific arrangement which is referred to as the "network topology". As mentioned earlier, network topology refers to physical and/or logical arrangement of network nodes in the distributed ledger 102. Herein, the network topology is at least one of: a star topology, a ring topology, a bus topology, a tree topology and a hybrid topology. The nodes 102a, 102b, ..., 102n in the distributed ledger 102 can be arranged in a ring topology for a specific requirement of the network. When the requirements of the network change, the arrangement of the nodes 102a, 102b, ..., 102n can be updated to a bus topology based on the performance of the topology with respect to the changed requirement of the distributed ledger 102.

At step 202, a change is detected in the distributed ledger 102. In one or more embodiments, the change in the distributed ledger 102 is at least one of: a node entering the distributed ledger 102, a node leaving the distributed ledger 102 or a change in environmental conditions of the distributed ledger 102. When a node is added to the distributed ledger 102, one or more new network links are created with the other nodes of the distributed ledger 102, and thereby the change is detected by the processing unit 104a. When a node leaves the network or is removed from the network, then one or more network links are deleted with other nodes of the distributed ledger 102, and thereby the change is detected by the processing unit 104a. Furthermore, when the environmental conditions of the assets 110a, 110b,....110x change associated with the one or more nodes 102a, 120b, .... 120n. The environmental conditions may refer to one or more conditions with respect to the changes in the assets 110a, 110b,....110x. The environmental conditions may be some changes in the requirements of assets 110a, 110b,....110x, changes in parameters of the assets 110a, 110b,....110x, changes in the network requirements, and so on. It should be understood that the environmental conditions are dependent on specific cases and therefore the changes in the environmental conditions are to be analyzed with respect to the application for which the distributed ledger is deployed.

According to an embodiment, the method of detecting the change comprises detecting a known change in the distributed ledger 102. Herein, the known change is notified to the other nodes in the distributed ledger prior to occurring in the distributed ledger. In an example, the one or more nodes associated with a group of aerial vehicles configured to inspect a geographical area are connected to each other over the network. As per a new request for inspection in a remote area, a group of aerial vehicles need to be disconnected from the main network and sent to the specific geographical location. In this case, the group of aerial vehicles being disconnected from the network, notify the other nodes associated with the remaining aerial vehicles. Therefore, the change herein is known change that occurs after notifying the other nodes in the distributed ledger 102.

According to an embodiment, the method of detecting the change comprises detecting an unknown change in the distributed ledger 102. Herein, the unknown change occurs abruptly in the distributed ledger without any notification to the other nodes in the distributed ledger. The unknown change can be abrupt changes in the distributed ledger such as loss of network connection, fault in the one or more nodes, power surge, network traffic, bandwidth requirements and so forth. In an embodiment, the method of detecting an unknown change comprises continuously monitoring network links between the plurality of nodes in the distributed ledger. It should be understood that as the nodes are connected to each other directly, the information about neighbouring nodes is maintained in a routing or finger table, and the corresponding network links are maintained via a Network Interface Card (NIC). By monitoring these connections (i.e., whether they are active or not) and correlating them with messages propagated, the system is capable of detecting unknown changes in the one or more nodes in the distributed ledger. In another embodiment, the method of detecting an unknown change comprises monitoring network traffic in the distributed ledger. Notably, the network traffic can also be monitored to derive inferences about the system 100. If a particular node in the distributed ledger observes that the number of network packets has decreased, it can be due to a network link being down, reduction in network bandwidth due to service disruption, or other similar reasons. If this reduction has happened on a specific network link, then even further information can be obtained. Advantageously, any reduction indicates a reduction in quality and mandates appropriate action. Therefore the quality of service (QoS) of the system is maintained.

At step 204, the one or more nodes impacted by the detected change are identified. It should be understood that only some of the nodes or all of the nodes from the plurality of nodes in the distributed ledger may be impacted by the changes in the distributed ledger. The changes in the distributed ledger such as a node entering the distributed ledger 102, a node leaving the distributed ledger 102 or a change in environmental conditions of the distributed ledger 102 impact one or more nodes in the distributed ledger 102. The nodes impacted by the change are identified.

At step 206, a current network topology of the one or more nodes in the distributed ledger is determined. Once the nodes impacted by the change are identified, the network links of the one or more detected nodes with other nodes are also identified. The network links between the detected nodes and other neighboring nodes are identified in order to determine the arrangement of nodes in the distributed ledger. The arrangement of nodes in the distributed ledger is identified so that the current network topology of the impacted one or more nodes is determined. Herein, the term "current network topology" as used herein refers to the arrangement of one or more nodes before the impact of the change in the distributed ledger. In an example, if the one or nodes were connected in a star topology before the impact of the one or more nodes, then the current topology is identified as star topology.

At step 208, it is determined if the current network topology of the one or more nodes associated with the detected change is required to be updated. In an embodiment, the method of determining if the current network topology of the one or more nodes associated with the detected change is required to be updated based on the performance of the current network topology as impacted by the detected change. The performance of the current network topology can be determined by efficiency parameters of a task being performed by the assets associated with the one or more nodes. In an example, when a change occurs in a distributed ledger, the performance of the current topology i.e. ring topology for one or more nodes may decrease when there is an abrupt increase in traffic, there is requirement of updating the current network topology for the one or more nodes. At step 208, a decision is made whether current network topology is required to be updated or not. If the current network topology is required to be updated, then step 210 is executed. If the current network topology is not required to be updated, then step 212 is executed.

At step 210 the one or more nodes are assigned to a new network topology based on a predefined set of rules, if the update of current network topology is required. The predefined set of rules may comprise a list of network topologies mapped to respective environmental conditions. The processing unit 104a may compare the list of predefined rules with the detected changes in the distributed ledger in order to assign a new network topology to the one or more nodes in the distributed ledger. In an embodiment, the predefined set of rules are stored in a knowledge base. The knowledge can be stored in the ledger 108. The different network topologies and their corresponding environmental conditions have been tabulated in Table 1.

**Table 1**

| Network Topology | Environmental Conditions | Properties |
|---|---|---|
| Star topology | Presence of a high capability hub (e.g., drones at their base station) | Minimal load on smaller nodes |
| Ring/Bus topology | Smaller nodes with limited capabilities (e.g., drones in remote location) | Low number of network links, easy detection of node failure |
| Hypercube topology | High availability requirements (e.g., IoT devices in nuclear station) | High density network links equally distributed across the network |
| Tree topology | Different types of devices with varying capabilities (e.g., some small drones and few larger ones) | Hierarchical connections, with larger nodes placed higher in the tree |
| Hybrid topology | Custom conditions or use cases can deem the precreation of a hybrid topology | Amalgamation of one or more simpler topologies |

It should be understood that the list mentioned in Table 1 is a non-exhaustive list and the scope of the claims should not be construed limiting to the network topologies and corresponding environmental conditions as disclosed herein. Moreover, it is possible to add new environmental conditions to the knowledge base for specific use cases. According to an embodiment, the method further comprises defining a new rule for a new change detected in the distributed ledger. Herein, the new rule defines a relationship between the new change and a preferred network topology when the change occurs in the distributed ledger. Furthermore, the knowledge base is updated with the defined new rule. In an example, when a new change is detected that is not available in the list stored in the knowledge base, the new network topology can be defined manually and updated in the knowledge base for future reference.

According to an embodiment, the method of assigning the one or more nodes to a new network topology based on the predefined set of rules further comprises assigning new neighboring nodes to the one or more nodes associated with the detected change. Further, the method comprises determining new network links between the one or more nodes to form the new topology. In an example, if the current topology is the ring topology and a due to new requirement there is going to be increase in the number of nodes, then it is determined that new network topology is hypercube network topology based on the predefined set of rules. In this case, new network links are created with the new nodes to form a hypercube network topology that will give optimal performance to the distributed ledger. The step 212 is executed when there is no requirement of updating the current network topology. The current network topology is maintained for one or more nodes impacted by the change, when there is no requirement for updating the network topology based on the performance of the distributed ledger.

In an exemplary implementation, let us consider one or more nodes associated with a set of unmanned aerial vehicles (UAVs)connected via a distributed ledger. For this example, let us consider the distributed ledger is a blockchain network. At one point of time, there may be close proximity of the set of UAVs with their hub which provides them with easy access to surplus network bandwidth. In this case, simple star network topology is sufficient. When there is request to perform a collaborative activity in a remote area, like surveillance, then change is detected in the blockchain network. Further, the current topology is determined as the star network topology. The detected change is compared with the set of predefined rules and it is concluded that due to absence of hub, the UAVs will need to create an appropriate network on the fly using the available devices. For this purpose, the set of UAVs may be assigned a new network topology such as the ring network topology based on the set of predefined rules. Also, the UAVs can join or leave the network arbitrarily and the network needs to adjust appropriately.

In another exemplary implementation, let us consider the use case of tracking a medicine or chemical from origin till delivery. While being manufactured in the factory, the IoT devices are available in abundance and some might have a high computation capability as well. Here, the nodes in factory could form a tree topology as a part of larger hybrid network. The high computation nodes are located higher on the hierarchy while IoT nodes on factory floor collect and transmit the data. When the medicine is finished and being moved to the delivery location via a truck with temperature sensors, these sensors are low computational capability devices. These nodes can follow a "bus topology". This allows for easier detection in case of node failure as well as lower load on the nodes. The whole network would evolve seamlessly. As the truck would move out of the delivery hub, with the change in network environment detected, the network can itself align parts of it (the node on the delivery truck) in a "bus topology". This essentially lowers the pressure compared to a structured network and increases the overall performance and fault tolerance of the network.

The proposed distributed ledger (in some example, blockchain framework) maintain an optimal performance or quality of service (QoS) of the system by dynamically re-arranging the one or more nodes to a new network topology when required as per the changing environmental conditions of the system. Existing blockchain technologies maintain a constant topology throughout even when drastic changes occur in the environment. This reduces the performance of the distributed network. The present invention improves upon this by assigning a new network topology to the one or more nodes which are affected by a change in the environmental conditions. Thus, the system and the method of the present disclosure allows for improved performance of blockchain devices by providing a way to dynamically update the network topology with respect to changing environmental conditions.

While the present disclosure has been described in detail with reference to certain embodiments, it should be appreciated that the present disclosure is not limited to those embodiments. In view of the present disclosure, many modifications and variations would present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

## Claims

1. Computer-implemented method (200) for dynamically assigning a network topology to one or more nodes (102a-102n), wherein the one or more nodes are adapted to manage multiple assets (110a-110n) in a distributed ledger (102), the method comprising:
detecting, by a processing unit (104a), a change in the distributed ledger (102);
identifying, by the processing unit (104a), the one or more nodes (102a-102n) impacted by the detected change;
determining, by the processing unit (104a), a current network topology of the one or more nodes (102a-102n) in the distributed ledger (102);
determining, by the processing unit (104a) if the current network topology of the one or more nodes (102a-102n) associated with the detected change is required to be updated; and
assigning, by the processing unit, (104a) the one or more nodes (102a-102n) to a new network topology based on a predefined set of rules, if the update of current network topology is required.

2. Method (200) according to claim 1, wherein the change in the distributed ledger (102) is at least one of: a node (102a-102n) entering the distributed ledger (102), a node (102a-102n) leaving the distributed ledger or a change in environmental conditions of the distributed ledger.

3. Method according (200) to any of the claims 1 or 2, wherein the method (200) of detecting the change comprises detecting a known change in the distributed ledger (102), wherein the known change is notified to the other nodes (102a-102n) in the distributed ledger (102) prior to occurring in the distributed ledger.

4. Method (200) according to any of the claims 1 to 3, wherein the method of detecting the change comprises detecting an unknown change in the distributed ledger (102), wherein the unknown event occurs abruptly in the distributed ledger (102) without any notification to the other nodes (102a-102n) in the distributed ledger.

5. Method according (200) to claims 1 and 4, wherein the method of detecting an unknown change comprises continuously monitoring network links between the plurality of nodes (102a-102n) by the processing unit (104a).

6. Method (200) according to claims 1 and 4, wherein detecting an unknown change comprises monitoring network traffic in the distributed ledger (102) by the processing unit (104a).

7. Method (200) according to any of the preceding claims, wherein determining if the current network topology of the one or more nodes (102a-102n) associated with the detected change is required to be updated based on the performance of the current topology as impacted by the change in the detected event.

8. Method (200) according to any of the preceding claims, wherein the method of assigning the one or more nodes (102a-102n) to a new network topology based on the predefined set of rules further comprises:
assigning new neighboring nodes to the one or more nodes (102a-102n) associated with the current topology;
determining new network links between the one or more nodes (102a-102n) to form the new topology.

9. Method (200) according to any of the preceding claims, wherein the network topology is at least one of: a star topology, a ring topology, a bus topology, a tree topology and a hybrid topology.

10. Method (200) according to any of the preceding claims, wherein the predefined set of rules are stored in a knowledge base (108).

11. Method (200) according to claims 1 and 10, further comprising:
defining a new rule for a new change occurred in the distributed ledger (102), wherein the new rule defines a relationship between the new change and a preferred network topology when the change is detected in the distributed ledger (102);
updating the knowledge base (108) with the defined new rule.

12. A system (100) for dynamically assigning a network topology to one or more nodes (102a, 102b, ..., 102n) in a distributed ledger (102), wherein the one or more nodes are adapted to manage multiple assets (110a, 110b, ..., 110x), the system (100) comprising:
one or more processing units (104a); and
a memory (104b) communicatively coupled to the one or more processing units (104a), the memory (104b) comprising a module stored in the form of machine-readable instructions executable by the one or more processing units (104a), wherein the module is configured to perform the method (200) steps according to claims 1 to 11.

13. A computer-program product, having computer-readable instructions stored therein, that when executed by a processor (104a), cause the processor (104a) to perform method (200) according to any of the claims 1 to 11.

14. A computer readable medium on which program code sections of a computer program are saved, the program code sections being loadable into and/or executable in a system to make the system (100) execute the method (200) steps according to any of the claims 1 to 11 when the program code sections are executed in the system (110).
